# EUROPÄISCHE PATENTSCHRIFT

(11) **EP 3 729 041 B1**
(45) Veröffentlichungstag und Bekanntmachung des Hinweises auf die Patenterteilung: **23.03.2022**
(21) Anmeldenummer: 18822393.7
(22) Anmeldetag: 21.12.2018
(51) Int. Cl.: G01M 15/02

(54) **VERFAHREN ZUM BETREIBEN EINES PRÜFSTANDS**
METHOD FOR OPERATING A TEST STAND
PROCÉDÉ DESTINÉ À FAIRE FONCTIONNER UN BANC D'ESSAI

(30) Priorität: 22.12.2017 AT 510742017
(43) Veröffentlichungstag der Anmeldung: 28.10.2020
(73) Patentinhaber: AVL List GmbH, 8020 Graz (AT)
(72) Erfinder: BIER, Maximilian, 64285 Darmstadt (DE); SCHMIDT, Martin, 63225 Langen (DE)
(74) Vertreter: Patentanwälte Pinter & Weiss OG
(86) Internationale Anmeldenummer: PCT/EP2018/086512
(87) Internationale Veröffentlichungsnummer: WO 2019/122305

(56) Entgegenhaltungen:
- M Nomura ET AL: "Decoupling torque control system for automotive engine tester", IEEE Transactions on Industry Applications, 1. März 2000 (2000-03-01), Seiten 467-474, XP055573063, New York DOI: 10.1109/28.833763 Gefunden im Internet: URL:https://ieeexplore.ieee.org/ielx5/28/1 8042/00833763.pdf?tp=&arnumber=833763&isnu mber=18042 [gefunden am 2019-03-22]

## Beschreibung

Die vorliegende Erfindung betrifft ein Verfahren zum Durchführen eines Prüflaufs auf einem Prüfstand mit einem Antriebsaggregat, das mittels einer Verbindungswelle mit einer Belastungsmaschine zum Antrieb oder zur Belastung des Antriebsaggregats verbunden wird, wobei die Belastungsmaschine am Prüfstand zur Durchführung des Prüflaufs von einer Regelungseinrichtung geregelt wird und das Antriebsaggregat zur Durchführung des Prüflaufs von einer Aggregatsregelungseinheit geregelt wird, wobei zur Durchführung des Prüflaufs vorgegebene Verläufe einer Drehzahl und eines Drehmoments des Antriebsaggregats nachgebildet werden. Weiters betrifft die Erfindung einen Prüfstand zum Durchführen eines Prüflaufs.

Bei der Entwicklung von Antriebsaggregaten, wie z.B. Verbrennungsmotoren, Elektromotoren oder einer Kombination aus Verbrennungsmotor und Elektromotor (sogenannte Hybridantriebe), kommen seit vielen Jahren Prüfstände zum Einsatz, deren grundlegender Aufbau und Wirkungsweise hinlänglich bekannt sind. Dabei ist es seit je her eine wesentliche Anforderung an solche Prüfstände, eine möglichst genaue und reproduzierbare Nachbildung von vorgegebenen Drehzahl-/Drehmoment Profilen an der Abtriebswelle des Antriebsaggregats zu gewährleisten. Hierfür wird das Antriebsaggregat über eine Verbindungswelle mit einer Belastungsmaschine (Dynamometer, Dyno) verbunden.

In der Regel wird am Prüfstand die Drehzahl über die Belastungsmaschine eingestellt und das Drehmoment über das Antriebsaggregat. Aufgrund begrenzter Verfügbarkeit von Antriebs- und Messtechnik bzw. Steuer- und Regelungseinrichtungen konnten zu Beginn vorwiegend stationäre Betriebspunkte (Drehzahl-/Drehmomentkombination) eingestellt und gemessen werden. Für viele Prüfläufe war es auch ausreichend, nur stationäre Betriebspunkte anzufahren. Durch steigende Anforderungen an Antriebsaggregate (z.B. hohe Motorleistung, geringer Verbrauch, geringer Schadstoffausstoß bei Verbrennungsmotoren) und fortschreitende Entwicklung auf den genannten technischen Gebieten, aber auch aufgrund steigender Anforderungen bzw. Vorgabe zur Prüfung von Antriebsaggregaten, wurde es möglich bzw. notwendig, an den Prüfständen nicht nur stationäre Betriebspunkte einzustellen, sondern auch dynamische Drehzahl-/Drehmomentverläufe.

"Dynamisch" bedeutet hierbei insbesondere nicht nur stationäre Betriebspunkte, sondern auch, vor allem auch rasche, Drehzahl- und/oder Drehmomentenänderungen. Diese Profile können z.B. gesetzlich vorgegebene Messzyklen für die Abgas-Zertifizierung von Verbrennungsmotoren sein, um Nachweise über die Einhaltung von Grenzwerten für SchadstoffEmissionen zu erbringen. Zur Optimierung von Leistung und Verbrauch von Antriebsaggregaten kommen aber auch immer öfter real, z.B. bei der Anwendung des Antriebsaggregats als Fahrzeugantrieb, im Zuge einer Testfahrt auf der Straße oder auf einer Teststrecke mit einem Fahrzeug gemessene hoch-dynamische und nicht standardisierte Fahrprofile zur Anwendung. Diese dynamischen Profile stellen sehr hohe Anforderungen an die Regelung von Prüfständen, die nicht immer zureichend erfüllt werden können.

Üblicherweise wird am Prüfstand die sogenannte Regelungsmethode N/M_{EFF} verwendet, wobei die Belastungsmaschine des Prüfstands die aufgrund eines Soll-Profils vorgegebene Drehzahl N_{M} des Antriebsaggregats einregelt und das Antriebsaggregat das vorgegebene effektive Drehmoment M_{EFF} an der Verbindungswelle zwischen Belastungsmaschine und Antriebsaggregat. Diese beiden Größen N_{M} bzw. M_{EFF} sind jedoch über die Massenträgheit des Antriebsaggregats stark miteinander gekoppelt. Die Stellgröße des Antriebsaggregats im Falle eines Verbrennungsmotors ist dabei beispielsweise die Fahrpedalstellung a, die sich direkt auf das innere effektive Drehmoment M_{INT_EFF} auswirkt, also jenes Drehmoment, das direkt auf die Massenträgheit des Verbrennungsmotors wirkt. Während Beschleunigungs- und Bremsvorgängen ergibt sich das effektive Drehmoment M_{EFF} an der Verbindungswelle aus einer Überlagerung von innerem effektiven Drehmoment M_{INT_EFF} und jenem Drehmoment, das für die Beschleunigung bzw. Abbremsung der Massenträgheit des Verbrennungsmotors zur Drehzahländerung nötig ist.

Das innere effektive Drehmoment M_{INT_EFF} ist aber nicht direkt messbar, weshalb bisher immer das messbare Drehmoment M_{EFF} an der Verbindungswelle geregelt wurde. Insbesondere bei dynamischen Prüfläufen ist es aber nicht möglich, das effektive Drehmoment M_{EFF} an der Verbindungswelle unabhängig von der Drehzahl N zu regeln. Oftmals wird die Stellgröße des Antriebsaggregats (beim Verbrennungsmotor z.B. die Fahrpedalstellung a) aus einem vorhandenen statischen Kennfeld (vermessene stationäre Betriebspunkte) mit der Drehzahl N_{M} und dem effektiven Drehmoment M_{EFF} als Eingänge ermittelt. Eine derartige Kennfeldbasierte "Feed-Forward" Regelung führt zu falschen Werten der Stellgröße, da der gemessene Wert des effektiven Drehmoments M_{EFF} an der Verbindungswelle in einem Betriebspunkt bei dynamischen Testzyklen nicht mit dem Wert im entsprechenden Betriebspunkt bei stationärem Betrieb übereinstimmt.

Außerdem ist die Stelldynamik eines Antriebsaggregats im Allgemeinen deutlich geringer als die einer gewöhnlichen Prüfstands-Belastungsmaschine. Dadurch wird das Drehmoment des Verbrennungsmotors verspätet gegenüber der Drehzahl der Belastungsmaschine eingestellt. Unter Stelldynamik wird hier verstanden, wie schnell eine Änderung der Stellgröße das Drehmoment beeinflusst. Am Beispiel eines Verbrennungsmotors wirkt sich eine Änderung der Fahrpedalstellung nicht unmittelbar auf das Drehmoment aus, sondern in der Regel erst nach einer gewissen Zeit, häufig im Bereich von einigen Sekunden. Das sind die wesentlichen Gründe, warum die bisherige Regelung eines Prüflaufs am Prüfstand bei dynamischen Testläufen zum Teil schlechte Ergebnisse liefert.

In der Veröffentlichung GRUENBACHER, E. et. al., 2008. Adaptive Control of Engine Torque with Input Delays. In: 17th World Congress of the International Federation of Automatic Control.Seoul, Korea, July 6-11, 2008. wird empfohlen, bei Prüfläufen auf Motorenprüfständen das innere, auf die Verbrennung zurückgehende Drehmoment zu regeln, jedoch wird dargelegt, dass dies in der Praxis schwierig sei, da das innere Drehmoment eine Überlagerung der einzelnen Expansionshübe bei der Verbrennung in den Zylindern des Verbrennungsmotors ist. Zudem ist dieses innere Drehmoment nicht direkt messbar und muss geschätzt werden. Darüber hinaus werden in dieser Veröffentlichung Prüfläufe mit dynamischen Drehzahlverläufen nicht betrachtet.

Das Dokument EP 3 067 681 A1 beschreibt ein Verfahren zum Betreiben eines Motoren- oder Antriebsstrangprüfstandes, wobei eine Indiziereinrichtung zur Erfassung des Brennraumdrucks verwendet wird. Dabei wird der Brennraumdruck kurbelwinkelgenau in ein indiziertes Drehmoment und weiter in ein effektives Drehmoment der Kurbelwelle umgerechnet, welches zur Regelung der Belastungsmaschine verwendet wird. Nachteilig bei diesem Verfahren ist jedoch, dass für die Zylinderdruckmessung die Brennräume des Verbrennungsmotors mittels mechanischer Bearbeitung zugänglich gemacht werden müssen und das Messverfahren sehr aufwändig und kostenintensiv ist.

In der Veröffentlichung M. NOMURA et al.: "Decoupling torque control system for automotive engine tester", IEEE Transactions on Industry Applications, 1.März 2000. wird ein Verfahren zum Durchführen eines Prüflaufs mit einem Verbrennungsmotor auf einem Prüfstand offenbart, wobei ein inneres effektives Drehmoment des Verbrennungsmotors geregelt wird. Demzufolge ist die Aufgabe der Erfindung, ein einfach anzuwendendes und gegenüber dem Stand der Technik verbessertes Verfahren zur Regelung des Drehmoments eines Antriebsaggregats zur Durchführung eines Prüflaufs auf einem Prüfstand bereitzustellen.

Erfindungsgemäß wird die Aufgabe dadurch gelöst, dass ein inneres effektives Drehmoment des Antriebsaggregats von der Aggregatsregelungseinheit geregelt wird, wobei ein inneres effektives Soll-Drehmoment aus den vorgegebenen Verläufen der Drehzahl und des Drehmoments des Antriebsaggregats und einer bekannten Massenträgheit des Antriebsaggregats ermittelt wird und ein inneres effektives Ist-Drehmoment während des Betriebs des Antriebsaggregats am Prüfstand aus Messwerten der Belastungsmaschine und/oder des Antriebsaggregats und/oder der Verbindungswelle und/oder einer bekannten Massenträgheit des Antriebsaggregats ermittelt wird.

Im Gegensatz zu gängigen Verfahren wird zur Regelung des Drehmoments des Antriebsaggregats nicht das effektive Drehmoment des Antriebsaggregats verwendet, das in der Regel an der Verbindungswelle zwischen Antriebsaggregat und Belastungsmaschine gemessen wird, sondern das sogenannte innere effektive Drehmoment, das ein gegenüber dem effektiven Drehmoment um die Beschleunigungseinflüsse der Massenträgheit des Antriebsaggregats bereinigtes Drehmoment ist. Dadurch ist im Wesentlichen eine Entkopplung von Drehzahl und Drehmoment am Prüfstand möglich, wodurch das effektive Drehmoment besser eingeregelt werden kann.

Das innere effektive Ist-Drehmoment kann im Gegensatz zum effektiven Ist-Drehmoment an der Verbindungswelle nicht direkt gemessen werden, allerdings kann es z.B. mittels eines Beobachters ermittelt werden. Als Beobachter können alle bekannten Algorithmen verwendet werden, welche einen, von Beschleunigungseinflüssen der Massenträgheit unabhängigen Wert des inneren effektiven Drehmoments ermitteln.

Vorzugsweise wird das innere effektive Ist-Drehmoment aus einer an der Belastungsmaschine oder am Antriebsaggregat oder an der Verbindungswelle gemessenen Ist-Drehzahl und eines an der Belastungsmaschine oder am Antriebsaggregat oder an der Verbindungswelle gemessenen effektiven Ist-Drehmoments und der bekannten Massenträgheit des Antriebsaggregats ermittelt. Dazu kann die gemessene Ist-Drehzahl nach der Zeit abgeleitet werden, mit der bekannten Massenträgheit des Antriebsaggregats multipliziert werden und das Produkt zum gemessenen effektiven Ist-Drehmoment addiert werden.

Im Falle der Verwendung eines Verbrennungsmotors als Antriebsaggregat kann das innere effektive Ist-Drehmoment mittels Zylinderdruckindizierung am Verbrennungsmotor ermittelt werden. Dazu wird vorzugsweise das innere effektive Ist-Drehmoment aus der Differenz zwischen einem indizierten Ist-Drehmoment und einem Reib-Drehmoment ermittelt, wobei das indizierte Ist-Drehmoment mittels der Zylinderdruckindizierung ermittelt wird.

Das innere effektive Soll-Drehmoment kann aus dem vorgegebenen Verlauf der Drehzahl des Antriebsaggregats, dem vorgegebenen Verlauf des Drehmoments des Antriebsaggregats und aus der bekannten Massenträgheit des Antriebsaggregats ermittelt werden, indem der Verlauf der vorgegebenen Drehzahl nach der Zeit abgeleitet wird und mit der bekannten Massenträgheit des Antriebsaggregats multipliziert wird und das Produkt zum vorgegebenen Verlauf des Drehmoments des Antriebsaggregats addiert wird. Die vorgegebenen Verläufe können beispielsweise aus aufgezeichneten Messdaten des Antriebsaggregats, aus gesetzlich vorgeschriebenen Messzyklen oder aus anderen Quellen ermittelt werden. Die Massenträgheit wird - je nach Entwicklungsziel - entsprechend der Massenträgheit eines Antriebsaggregats eines Referenzbetriebs oder entsprechend der Massenträgheit des zu prüfenden Antriebsaggregats gewählt und wird als bekannt vorausgesetzt. Ebenso könnte der Sollwert des inneren effektiven Drehmoments beispielsweise aus aufgezeichneten Daten eines Aggregate-Steuergeräts (z.B. ECU eines Verbrennungsmotors) ermittelt werden.

Vorteilhafterweise wird zur Regelung des Antriebsaggregats eine Vorsteuerung einer Stellgröße des Antriebsaggregats verwendet, wobei Vorsteuerwerte der Stellgröße vorzugsweise aus einem Referenzprüflauf des Antriebsaggregats oder eines Referenzantriebsaggregats ermittelt werden. Besonders bevorzugt wird als Stellgröße der Vorsteuerung die Fahrpedalstellung verwendet. Die Vorsteuerwerte können aus dem inneren effektiven Soll-Drehmoment und aus einer Drehzahl, insbesondere der Ist-Drehzahl oder der vorgegebenen Drehzahl ermittelt werden, vorzugsweise aus einem Kennfeld. Dadurch wird die Regelung verbessert, da die Aggregatsregelungseinheit nur mehr kleinere Abweichungen ausregeln muss.

Gemäß einer weiteren vorteilhaften Ausgestaltung der Erfindung wird die Stelldynamik des Antriebsaggregats bei dessen Regelung mittels einer Übertragungsfunktion berücksichtigt, indem Sollwerte der Regelung oder die Vorsteuerwerte der Stellgröße mittels der Übertragungsfunktion korrigiert werden. Dadurch können unterschiedliche Verzögerungen im Aufbau des inneren effektiven Drehmoments verschiedener Antriebsaggregate kompensiert werden, wodurch sich eine verbesserte Regelungsgenauigkeit ergibt.

Die Korrektur der Sollwerte kann im einfachsten Fall erfolgen, indem die Sollwerte oder die Vorsteuerwerte der Stellgröße um eine Totzeit auf der Zeitachse verschoben werden. Die Totzeit kann dabei für alle Betriebspunkte des Antriebsaggregats gleich groß festgelegt werden oder abhängig vom Betriebspunkt des Antriebsaggregats festgelegt werden. Damit kann die unterschiedliche Dynamik im Aufbau des inneren effektiven Drehmoments für verschiedene Betriebspunkte ausgeglichen werden, wodurch eine weitere Verbesserung der Regelungsgenauigkeit erzielt wird.

Die Berücksichtigung unterschiedlicher Betriebspunkte kann dadurch erreicht werden, dass die Totzeit für einen Betriebspunkt des Antriebsaggregats abhängig vom Gradienten des Verlaufs des inneren effektiven Soll-Drehmoments in dem Betriebspunkt festgelegt wird. Durch die Analyse des Verlaufs des inneren effektiven Soll-Drehmoments ist kein zusätzlicher Messaufwand erforderlich. Dadurch ist es z.B. möglich, das unterschiedliche zeitliche Trägheitsverhalten des Antriebsaggregats bei Drehmomentanstieg und Drehmomentabfall zu berücksichtigen.

Die Totzeit kann aber auch durch Vermessung des Antriebsaggregats oder eines ReferenzAntriebsaggregats auf dem Prüfstand ermittelt werden, vorzugsweise indem die Stellgröße des Antriebsaggregats sprunghaft geändert wird und die Zeit zwischen der sprunghaften Änderung der Stellgröße und einer dadurch bewirkten Änderung des inneren effektiven Ist-Drehmoments gemessen wird. Es wäre beispielsweise denkbar, Totzeit-Kennfelder für Antriebsaggregate mit ähnlicher zu erwartender Stelldynamik zu erstellen, beispielsweise in Abhängigkeit von Hubraum, Aufladung, Zylinderzahl, Nenndrehzahl, etc.

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt
Fig.1 den allgemeinen Aufbau eines Prüfstands
Fig.2 die Funktion des Beobachters
Fig.3a bis 3c erfindungsgemäße Verfahrensabläufe
Fig.4 einen Referenzprüflauf
Fig.5 Ergebnisse bei herkömmlicher Regelungsart N/M_{EFF}
Fig.6 Ergebnisse bei Regelungsart N/M_{INT_EFF}
Fig.7 Ergebnisse bei Regelungsart N/M_{INT_EFF} mit Verschiebung des inneren effektiven Soll-Drehmoments M_{INT_EFF_SOLL} um eine Totzeit Δt
Fig.8 Ergebnisse bei Regelungsart N/M_{INT_EFF} mit Verschiebung des Vorsteuerwerts
der Fahrpedalstellung a um eine Totzeit Δt

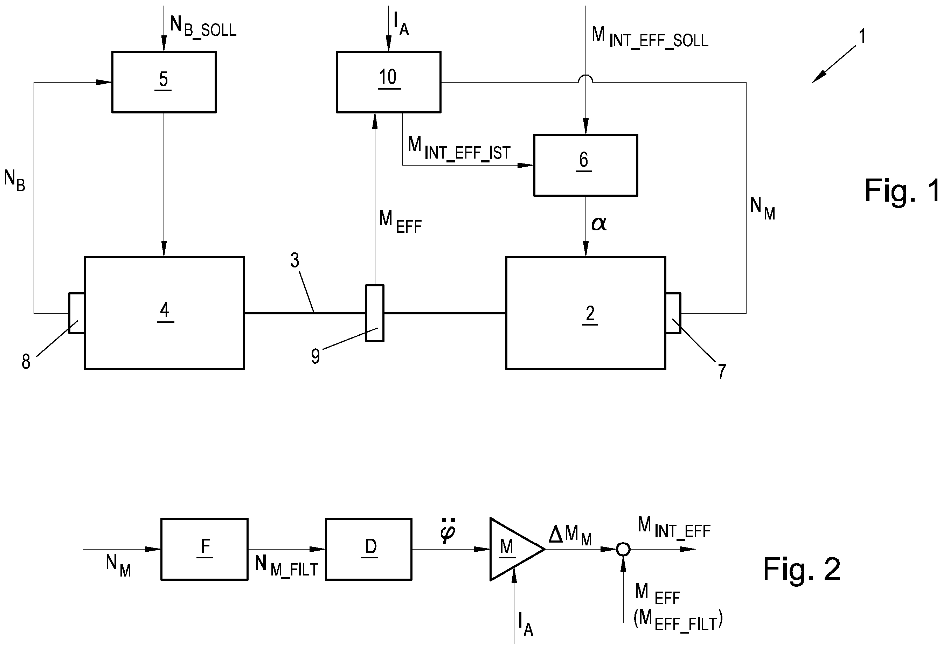

Fig.1 zeigt einen bekannten üblichen Aufbau eines Prüfstandes 1 mit einem Antriebsaggregat 2, das mittels einer Verbindungswelle 3 zur Drehmomentübertragung mit einer Belastungsmaschine 4 verbunden ist, mit einer Regelungseinrichtung 5 zur Regelung der Belastungsmaschine 4 und mit einer Aggregatsregelungseinheit 6 zur Regelung des Antriebsaggregats 2. Die Regelungseinrichtung 5 und die Aggregatsregelungseinheit 6 können mit geeigneter Hardware und/oder Software (auch auf einer gemeinsamen Hardware) implementiert sein. Das Antriebsaggregat 2 weist eine Drehzahlmesseinrichtung 7 zur Messung der Aggregatsdrehzahl N_{M} auf und die Belastungsmaschine 4 weist ebenfalls eine Drehzahlmesseinrichtung 8 zur Messung der Belastungsmaschinendrehzahl N_{B} auf. An der Verbindungswelle 3 ist zwischen Antriebsaggregat 2 und Belastungsmaschine 4 eine Drehmomentmesseinrichtung 9 zur Messung des effektiven Drehmoments M_{EFF} des Antriebsaggregats 2 angeordnet.

Unter einer Belastungsmaschine 4 sind nicht nur die üblichen elektrischen Maschinen, wie beispielsweise Gleichstrommaschinen, Asynchronmaschinen oder Drehstrom-Synchronmaschinen zu verstehen, welche direkt mit der Verbindungswelle 3 verbunden sind, sondern auch z.B. Kombinationen von elektrischen Maschinen und Getrieben, z.B. in Form sogenannter Test Rig Transmission Systeme (TRT). Dabei können z.B. zwei oder mehrere elektrische Maschinen mittels eines Summiergetriebes verbunden sein, welches seinerseits mit der Verbindungswelle 3 zum Antrieb oder zur Belastung mit dem Antriebsaggregat 2 verbunden ist. Im Summiergetriebe werden die Leistungen der beiden (oder mehreren) elektrischen Maschinen addiert, wobei gegebenenfalls auch eine Übersetzung auf ein bestimmtes Drehzahlniveau erfolgen kann. Natürlich ist dies nur beispielhaft, es können auch alle anderen geeigneten Maschinen oder Kombinationen von Maschinen und Getrieben als Belastungsmaschine 4 verwendet werden.

Zur Ermittlung des inneren effektiven Ist-Drehmoments M_{INT_EFF_IST} des Antriebsaggregats 2 kann z.B. ein Beobachter 10 vorgesehen sein, der ebenfalls wieder als geeignete Hardware und/oder Software ausgeführt ist. Als Beobachter 10 können dabei alle bekannten Algorithmen verwendet werden, welche ein, von Beschleunigungseinflüssen der Massenträgheit I_{A} des Antriebsaggregats 2 bereinigtes Drehmoment ermitteln, welches erfindungsgemäß als inneres effektives Ist-Drehmoments M_{INT_EFF_IST} verwendet wird. Die Funktion eines solchen Beobachters 10 ist prinzipiell bekannt, jedoch soll seine grundlegende Funktionsweise der Vollständigkeit halber nachstehend anhand Fig.2 kurz erklärt werden.

Wenn das Antriebsaggregat 2 als Verbrennungsmotor ausgeführt ist, kann zur Ermittlung des inneren effektiven Ist-Drehmoments M_{INT_EFF_IST} alternativ zu einem Beobachter 10 auch ein Zylinderdruckindiziersystem verwendet werden. Damit kann der Zylinderdruck im Brennraum des Verbrennungsmotors kurbelwinkelgenau gemessen werden und auf Basis des gemessenen Zylinderdrucks kann mittels thermodynamischer Gesetzmäßigkeiten ein indiziertes Ist-Drehmoment M_{NT_IST} ermittelt werden. Bereinigt man dieses indizierte Ist-Drehmoment M_{NT_IST} um die bekannte innere Reibung des Verbrennungsmotors (die beispielsweise in Form eines Kennfeldes über den Betriebsbereich des Verbrennungsmotors vorliegt), erhält man das gesuchte innere effektive Ist-Drehmoment M_{INT_EFF_IST}. Die Reibungseinflüsse können beispielsweise in Form eines Reib-Drehmoments M_{R} durch Schleppmessungen des Verbrennungsmotors am Prüfstand 1 oder mittels anderer geeigneter Methoden ermittelt werden. Da die Methode der Zylinderdruckindizierung hinlänglich bekannt ist, wird hier nicht näher darauf eingegangen. Eine detaillierte Beschreibung ist z.B. dem Dokument EP 3 067 681 A1 zu entnehmen.

Generell ist das erfindungsgemäße Verfahren nicht auf bestimmte Antriebsaggregate 2 beschränkt, sondern kann für unterschiedlichste Antriebsaggregate 2 verwendet werden wie z.B. Verbrennungsmotoren, Elektromotoren, eine Kombination von Elektro- und Verbrennungsmotoren (sogenannte Hybridantriebe), sofern die erforderlichen Größen verfügbar sind. Auch kann das Verfahren z.B. bei Antriebssträngen angewendet werden, bei denen die genannten Antriebsaggregate 2 über ein Getriebe, Kupplung, Differenzial, Halbachsen, etc. mit der Verbindungswelle 3 verbunden sein kann.

Fig.2 zeigt anhand eines Blockschaltbildes beispielhaft eine bekannte vereinfachte Funktionsweise eines Beobachters 10 zur Ermittlung des inneren effektiven Drehmoments M_{INT_EFF} am Beispiel eines Verbrennungsmotors als Antriebsaggregat 2. Dabei wird eine Motordrehzahl N_{M} von der Drehzahlmesseinrichtung 7 am Verbrennungsmotor gemessen und mittels eines Filters F über ein Arbeitsspiel (z.B. 720° Kurbelwinkel bei 4-Takt Motoren) und die Zylinderanzahl des Verbrennungsmotors gemittelt. Durch diese Mittelung wird der über ein Arbeitsspiel des Verbrennungsmotors ungleichmäßige Drehmomenteintrag kompensiert, der aus der Verbrennung im Zylinder des Verbrennungsmotors und aus der entsprechenden Zylinderanzahl des Verbrennungsmotors resultiert und eine Änderung der Motordrehzahl N_{M} bewirkt. Beispielsweise findet bei einem 4-Takt Motor in jedem Zylinder alle 720° Kurbelwinkel eine Verbrennung statt, welche eine Kraft auf den Kolben und in Folge einen Drehmomenteintrag auf die Kurbelwelle erzeugt. Bei einem 4-Zylindermotor würde das z.B. einen Drehmomenteintrag alle 180° Kurbelwinkel bedeuten, bei einem 6-Zylindermotor z.B. 120° Kurbelwinkel, usw. Aufgrund der beschriebenen Filterung der Motordrehzahl N_{M} erhält man eine gefilterte Motordrehzahl N_{M}__{FILT}. Analog kann eine solche Mittelung bzw. Filterung auch auf das effektive Drehmoment M_{EFF} angewendet werden, wodurch man ein gefiltertes effektives Drehmoment M_{EFF_FILT} erhält. Die gefilterte Motordrehzahl N_{M}__{FILT} wird danach mittels eines Differentiators D zeitlich abgeleitet, wodurch man eine Winkelbeschleunigung *ϕ̈* erhält.

Im nächsten Schritt wird die erhaltene Winkelbeschleunigung *ϕ̈* in einem Multiplikator M mit der als bekannt vorausgesetzten Massenträgheit I_{A} des Verbrennungsmotors multipliziert und man erhält ein Bereinigungsdrehmoment ΔM_{M}. In einem Summierer S werden nun das erhaltene Bereinigungsdrehmoment ΔM_{M} und das, beispielsweise wieder über ein Arbeitsspiel und die Zylinderanzahl des Verbrennungsmotors gefilterte, effektive Drehmoment M_{EFF_FILT} zu einem inneren effektiven Drehmoment M_{INT_EFF} addiert. Abhängig vom Verlauf der Motordrehzahl N_{M} und dem Vorzeichen der daraus gebildeten zeitlichen Ableitung der gefilterten Motordrehzahl N_{M_FILT} bzw. der Winkelbeschleunigung *ϕ̈* wird somit das gemessene und über ein Arbeitsspiel und die Zylinderanzahl des Verbrennungsmotors gemittelte effektive Drehmoment M_{EFF_FILT} an der Verbindungswelle 3 erhöht oder reduziert, wodurch der dynamische Einfluss der Massenträgheit I_{A} des Verbrennungsmotors berücksichtigt wird.

Diese Berechnung kann sowohl "online", mittels des Beobachters 10, zur Ermittlung des inneren effektiven Ist-Drehmoments M_{INT_EFF_IST} verwendet werden, als auch "offline" oder "online" zur Ermittlung des inneren effektiven Soll-Drehmoments M_{INT_EFF_SOLL} aus einem vorgegebenen Referenz-Drehzahl-/Drehmomentenprofil für die Durchführung des Prüflaufs am Prüfstand 1. Als "online" ist in diesem Zusammenhang die Ermittlung des inneren effektiven Ist-Drehmoments M_{INT_EFF_IST} während eines Prüflaufs auf einem Prüfstand 1 zu verstehen und als "offline" die Ermittlung des inneren effektiven Soll-Drehmoments M_{INT_EFF_SOLL} außerhalb eines Prüflaufs auf einem Prüfstand 1. Man könnte aber auch bei der "online" Ermittlung des effektiven Ist-Drehmoments M_{INT_EFF_IST} auf den Schritt der Filterung verzichten, eine Art Filterung würde dann jedoch im Wesentlichen implizit durch die Charakteristik des verwendeten Reglers der Aggregatsregelungseinheit 6 sowie durch das Verzögerungsverhalten des Antriebsaggregats 2 erfolgen.

Im Falle einer Fahrzeuganwendung des Verbrennungsmotors kann die Ermittlung des inneren effektiven Soll-Drehmoments M_{INT_EFF_SOLL} beispielsweise aus aufgezeichneten Messdaten eines realen Fahrversuchs (Drehzahl-/Drehmomentenprofil) oder auch aus anderen Quellen erfolgen. Das beschriebene Beobachter-Verfahren ist natürlich nicht auf die Anwendung bei einem Verbrennungsmotor beschränkt, es wäre auch bei anderen Antriebsaggregaten 2, wie z.B. Elektromotoren, Hybridantrieben, etc. anwendbar.

Die Massenträgheit I_{A} des Antriebsaggregats 2 kann dabei als bekannt vorausgesetzt werden. Es können auch unterschiedliche Massenträgheiten I_{A} zur Berechnung des Soll-Drehmoments M_{INT_EFF_SOLL} verwendet werden. Es kann beispielsweise die bekannte Massenträgheit I_{A} des Antriebsaggregats 2 am Prüfstand 1 verwendet werden. Es kann aber auch die Massenträgheit I_{A} des Antriebsaggregats 2 aus einem Referenzlauf, der am Prüfstand nachgefahren werden soll, verwendet werden. D.h., dass die Massenträgheit I_{A} des Antriebsaggregats 2 am Prüfstand 1 nicht mit der Massenträgheit des Antriebsaggregats übereinstimmen muss, mit dem der Referenzlauf erstellt oder vermessen wurde. Dabei wird beispielsweise die interne Leistung (Leistungen im Brennraum eines Verbrennungsmotors als Antriebsaggregat 2) des Prüflings gut mit dem Referenzlauf übereinstimmen. Wird ein Referenzlauf am Prüfstand nachgefahren und man verwendet die tatsächliche Massenträgheit I_{A} des Antriebsaggregats 2 am Prüfstand, dann wird die Leistung an der Verbindungswelle 3 gut mit dem Referenzlauf übereinstimmen.

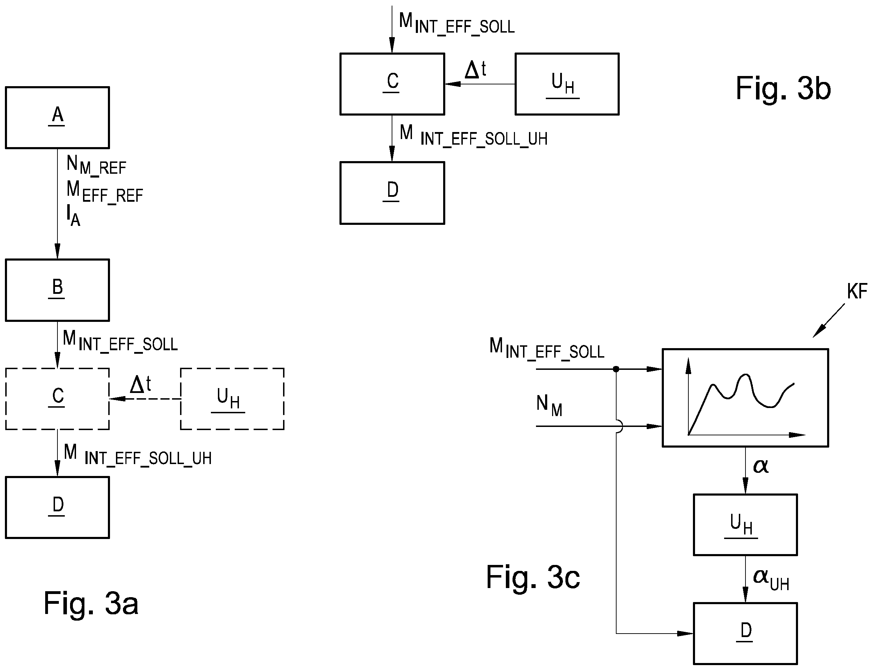

Fig.3 zeigt den prinzipiellen Ablauf des erfindungsgemäßen Verfahrens anhand eines Ablaufdiagramms. Im ersten Schritt, symbolisiert durch Block A, erfolgt die Generierung oder Bereitstellung von nachzubildenden Verläufen für die Drehzahl und das Drehmoment des Antriebsaggregats 2 für den am Prüfstand 1 durchzuführenden Prüflauf. Es werden Referenzwerte der Aggregatsdrehzahl N_{A_REF,} des effektiven Drehmoments M_{EFF_REF} und die Massenträgheit I_{A} des Antriebsaggregats 2 benötigt. Diese Daten können beispielsweise durch Messdaten des realen Betriebs (Referenzlauf) bereitgestellt werden, sie können aber auch durch gesetzlich festgelegte Messzyklen vorgegeben sein oder aus anderen Quellen stammen.

Im nächsten Schritt, durch Block B dargestellt, wird aus den vorgegebenen Referenzdaten das innere effektive Soll-Drehmoment M_{INT_EFF_SOLL} mit der gleichen Methodik berechnet, die bereits anhand des Beobachters 10 in Fig.2 zur Ermittlung des inneren effektiven Ist-Drehmoments M_{INT_EFF_IST} beschrieben wurde. Im Falle der Ausführung des Antriebsaggregats 2 als Verbrennungsmotor wird die Referenz-Motordrehzahl N_{M_REF} vorzugsweise über ein Arbeitsspiel und der Zylinderanzahl des Verbrennungsmotors gefiltert und zeitlich abgeleitet, wodurch man eine Referenz-Winkelbeschleunigung *ϕ̇_{REF}* erhält. Abhängig von der Qualität der verfügbaren Referenzdaten der Motordrehzahl N_{M_REF} kann auf die Mittelung über ein Arbeitsspiel und die Zylinderanzahl auch verzichtet werden, beispielsweise wenn eine derartige Mittelung schon im Rahmen der Ermittlung der Referenzdaten stattgefunden hat oder im Falle einer Ausführung des Antriebsaggregats als Elektromotor mit im Wesentlichen über eine Umdrehung gleichmäßigem Drehmomenteintrag.

Die Referenz-Winkelbeschleunigung *ϕ̇_{REF}* wird danach mit der bekannten Massenträgheit I_{A} des Antriebsaggregats 2 (z.B. I_{A} des Verbrennungsmotors) zu einem Referenz-Bereinigungsdrehmoment ΔM_{M_REF} multipliziert. Schließlich wird das Referenz-Bereinigungsdrehmoment ΔM_{M_REF} mit dem effektiven Referenz-Drehmoment M_{EFF_REF} (im Falle eines Verbrennungsmotors mit dem über ein Arbeitsspiel und die Zylinderanzahl des Verbrennungsmotors gemittelten effektiven Referenz-Drehmoments M_{EFF_REF_FILT}) addiert, woraus das innere effektive Soll-Drehmoment M_{INT_EFF_SOLL} resultiert, das bereits zur Regelung des Antriebsaggregats 2 herangezogen werden kann.

Wiederum kann abhängig von der Qualität der verfügbaren Referenzdaten auf eine Mittelung des inneren effektiven Drehmoments M_{INT_EFF_SOLL} über ein Arbeitsspiel und die Zylinderanzahl des Verbrennungsmotors auch verzichtet werden, beispielsweise wenn eine derartige Mittelung schon im Rahmen der Ermittlung der Referenzdaten stattgefunden hat oder in Abhängigkeit der Ausführung des Antriebsaggregats 2 (z.B. als Elektromotor). Sind die erforderlichen Messdaten für ein solches Vorgehen nicht verfügbar, können analoge Verfahren eingesetzt werden, um aus den verfügbaren Referenzdaten das innere effektive Soll-Drehmoment M_{INT_EFF_SOLL} zu ermitteln.

Beispielsweise könnte im Rahmen eines Fahrversuchs eines Fahrzeugs mit entsprechendem Antriebsaggregat 2 aus einer gemessenen Fahrzeugbeschleunigung das erforderliche Drehmoment zur Beschleunigung der Fahrzeugmasse berechnet werden und über bekannte Massenträgheiten, Getriebeübersetzungen, etc. das dafür notwendige innere effektive Drehmoment M_{INT_EFF} berechnet und als inneres effektives Soll-Drehmoment M_{INT_EFF_SOLL} verwendet werden. Auch wäre es denkbar, das innere effektive Soll-Drehmoment M_{INT_EFF_SOLL} eines Antriebsaggregats 2 aus gespeicherten Daten eines Aggregatesteuergeräts wie z.B. eines Motorsteuergeräts (ECU - engine control unit) eines Verbrennungsmotors zu ermitteln. Alternativ könnten die Werte für das innere effektive Soll-Drehmoment M_{INT_EFF_SOLL} wie oben beschreiben auch aus Indizierdaten des Referenzlaufs ermittelt werden.

Das resultierende innere effektive Soll-Drehmoment M_{INT_EFF_SOLL} kann bereits direkt zur Regelung des Antriebsaggregats 2, z.B. des Verbrennungsmotors am Prüfstand 1 herangezogen werden, was durch Block D symbolisiert ist. Dazu kann das innere effektive Ist-Drehmoment M_{INT_EFF_IST} wie oben beschreiben während des Prüflaufs ermittelt werden, beispielsweise im Beobachter 10 oder im Falle eines Verbrennungsmotors auch durch ein Zylinderdruckindiziersystem. Die Abweichung zwischen dem inneren effektiven Soll-Drehmonent M_{INT_EFF_SOLL} und dem inneren effektiven Ist-Drehmoment M_{INT_EFF_IST} kann dann mit einem geeigneten Regler, beispielsweise ein einfacher PI-Regler, am Prüfstand 1 ausgeregelt werden.

Die Regelung kann aber auch in einer Vorsteuerung ein vorgegebenes Kennfeld KF für die Stellgröße verwenden, z.B. Fahrpedalstellung a eines Verbrennungsmotors über der Motordrehzahl N_{M} und dem effektiven Drehmoment M_{EFF} oder dem inneren effektiven Drehmoment M_{INT_EFF}. Dazu wird z.B. aus dem Kennfeld KF aus dem effektiven Drehmoment M_{EFF} (oder dem gefilterten effektiven Drehmoment M_{EFF_FILT}) und der Motordrehzahl N_{M} (oder allgemein der Aggregatsdrehzahl N_{A}) eine Vorsteuer-Stellgröße, z.B. die Fahrpedalstellung a, ermittelt. Der Regler, vorzugsweise die Aggregatsregelungseinheit 6, dem/der wieder die Abweichung zwischen dem inneren effektiven Soll-Drehmoments M_{INT_EFF_SOLL} und dem inneren effektiven Ist-Drehmoments M_{INT_EFF_IST} zugeführt werden, ermittelt dann eine Regler-Stellgröße, mit der dann nur mehr kleinere Abweichungen ausgeregelt werden, die sich aus Ungenauigkeiten des Kennfeldes KF ergeben.

Die Stellgröße für das Antriebsaggregat 2 ergibt sich somit in bekannter Weise als Summe der Vorsteuer-Stellgröße und der Regler-Stellgröße. Ein solches Kennfeld KF kann z.B. durch stationäre Prüfstandsmessungen in verschiedenen Betriebspunkten im relevanten Betriebsbereich des Antriebsaggregats 2 ermittelt werden. Dabei werden bei einem Verbrennungsmotor beispielsweise mittels der Fahrpedalstellung a und der Motordrehzahl N_{M} stationäre Betriebspunkte eingestellt und das effektive Drehmoment M_{EFF} an der Verbindungswelle 3 im jeweiligen Betriebspunkt gemessen und in einem Kennfeld KF hinterlegt. Aufgrund der fehlenden Dynamik der Massenträgheit entspricht das effektive Drehmoment M_{EFF} bei stationärem Betrieb dem inneren effektiven Drehmoment M_{INT_EFF}. Das erhaltene Kennfeld KF wird invertiert, sodass man ein Kennfeld KF der Fahrpedalstellung a, aufgetragen über dem inneren effektiven Drehmoment M_{INT_EFF} und der Motordrehzahl N_{M} erhält.

Als Regler kann grundsätzlich jeder geeignete Regler eingesetzt werden, der gegebenenfalls in bekannter Art und Weise auch anwendungsspezifisch parametriert werden muss und der vorzugsweise als Hardware oder Software in der Aggregatsregelungseinheit 6 implementiert ist.

Gemäß einer weiteren Ausgestaltung des erfindungsgemäßen Verfahrens ist es vorteilhaft, wenn die beschränkte Stelldynamik des Antriebsaggregats 2 am Prüfstand 1 bei der Durchführung des Prüflaufs berücksichtigt wird. Hierbei ist es grundsätzlich unerheblich, ob der Prüflauf mit dem inneren effektive Drehmoment M_{INT_EFF} durchgeführt oder in herkömmlicher Weise mit dem effektiven Drehmoment M_{EFF}, das an der Verbindungswelle 3 wirkt. Wenn das innere effektive Drehmoment M_{INT_EFF} verwendet wird, dann kann dieses wie oben beschrieben ermittelt und verwendet werden. Das effektive Drehmoment M_{EFF} kann an der Verbindungswelle 3 einfach gemessen werden. Die Berücksichtigung der Stelldynamik ist damit grundsätzlich unabhängig von der Verwendung des inneren effektiven Drehmoments M_{INT_EFF} und kann damit unabhängig vom verwendeten Drehmoment realisiert werden. In einer vorteilhaften Ausgestaltung wird der Prüflauf aber mit dem inneren effektive Drehmoment M_{INT_EFF} durchgeführt und die Stelldynamik des Antriebsaggregats 2 wird wie nachfolgend beschrieben bei der Durchführung des Prüflaufs am Prüfstand 1 berücksichtigt.

Zur Berücksichtigung der Stelldynamik bei der Regelung des Antriebsaggregats 2 wird eine Übertragungsfunktion UF verwendet, die das Zeitverhalten des Antriebsaggregats 2 korrigiert. Das Zeitverhalten des Antriebsaggregats 2 beschreibt im Wesentlichen die zeitliche Trägheit der Regelstrecke (also alles zwischen Einstellen der Stellgröße und des Drehmomentaufbaus) und bildet den verzögerten Drehmomentaufbau des Antriebsaggregats 2 auf die Stellgröße ab. Beispielsweise die Zeit zwischen dem Einstellen der Fahrpedalstellung a und dem verzögerten Anstieg (oder Abfall) des inneren effektiven Drehmoments M_{INT_EFF}.

Aufgrund seiner physikalischen Wirkungsweise hat ein Elektromotor im Allgemeinen eine höhere Stelldynamik als ein Verbrennungsmotor, weshalb die Berücksichtigung der Stelldynamik bei der Durchführung des Prüflaufs insbesondere bei einem Verbrennungsmotor vorteilhaft ist. Dies ist im Wesentlichen darauf zurückzuführen, dass ein Verbrennungsmotor aufgrund der zugrundeliegenden physikalischen Vorgänge mehr Zeit für die Umsetzung einer Drehmomentanforderung benötigt, also die Zeit zwischen Vorgabe der Stellgröße (z.B. Fahrpedalstellung a) und des tatsächlichen Drehmomentaufbaus. Ein Verbrennungsmotor mit Direkteinspritzung und Abgasturboaufladung benötigt z.B. ausreichend Zeit für den Ladedruckaufbau, die Gemischbildung, Verbrennung, etc. In einem Elektromotor hingegen sind weniger physikalische Vorgänge nötig, beispielsweise wird wesentlich weniger Zeit benötigt, um ein Magnetfeld aufzubauen.

In einer einfachen Ausgestaltung kann die Übertragungsfunktion UF die Werte des inneren effektiven Soll-Drehmoments M_{INT_EFF_SOLL} um eine sogenannte Totzeit Δt auf der Zeitachse verschieben. Damit erhält man ein, um die Totzeit Δt verschobenes inneres effektives Soll-Drehmoment M_{INT_EFF_SOLL_UH}. Das ist in Fig.3a und Fig.3b durch den Block C symbolisiert, wobei der Block C in Fig.3a optional ist, je nachdem ob eine Korrektur mittels Übertragungsfunktion UF verwendet wird oder nicht. Das korrigierte innere effektive Soll-Drehmoment M_{INT_EFF_SOLL_UH} kann als Sollwert zur Regelung verwendet werden (Block D).

Alternativ kann auch aus dem inneren effektiven Soll-Drehmoment M_{INT_EFF_SOLL} und der Soll-Drehzahl N_{M} mit einer Übertragungsfunktion UF eine zugehörige, zeitlich korrigierte Stellgröße, beispielsweise die Fahrpedalstellung a, ermittelt werden. Dazu kann die Stellgröße beispielsweise über ein Kennfeld KF aus dem inneren effektiven Soll-Drehmoment M_{INT_EFF_SOLL} und der Soll-Drehzahl N_{M} ermittelt werden und diese Stellgröße um die Totzeit Δt verschoben werden, wie in Fig.3c dargestellt ist. Die so ermittelte zeitlich verschobene Stellgröße α_{UH} kann zur Vorsteuerung der Regelung des inneren effektiven Drehmoments M_{INT_EFF} verwendet werden, was durch Block D symbolisiert ist.

Dabei kann die Totzeit Δt im einfachsten Fall ein vorgegebener oder parametrierter konstanter Zeitwert sein. Idealerweise wird die Totzeit Δt aber in Abhängigkeit eines Betriebspunktes (Drehmoment/Drehzahl) des Antriebsaggregats 2 festgelegt. Dazu kann die Totzeit Δt z.B. aus Kennfeldern ermittelt werden, in denen die Totzeit Δt beispielsweise in Abhängigkeit der Aggregatsdrehzahl N_{M} und des inneren effektiven Drehmoments M_{INT_EFF} (Δt = f(N_{M},

M_{INT_EFF})) des Antriebsaggregats 2 oder des effektiven Drehmoments M_{EFF} (Δt = f(N_{M}, M_{EFF})) 2 aufgetragen ist. Solche Kennfelder können beispielsweise durch vorherige Vermessung des Antriebsaggregats 2 auf einem Prüfstand 1 ermittelt werden oder näherungsweise aus Erfahrungswerten oder aus der Vermessung bauartähnlicher Referenz-Antriebsaggregate ermittelt werden. Bauartähnliche Verbrennungsmotoren können z.B. Verbrennungsmotoren mit vergleichbaren Kenngrößen sein, z.B. ähnlicher Hubraum, gleiche Zylinderzahl, gleiches Aufladekonzept, gleiche Gemischbildung etc.

Bei der Ermittlung der Totzeit Δt durch vorherige Vermessung des Antriebsaggregats 2 auf einem Prüfstand 1 wird vorzugsweise jeweils ein Kennfeld für den Anstieg des Drehmoments des Antriebsaggregats 2 und eines für den Abfall des Drehmoments des Antriebsaggregats 2 ermittelt. Dabei werden vorzugsweise in ausgewählten Betriebspunkten des Antriebsaggregats 2 sprunghafte Änderungen der Stellgröße, z.B. der Fahrpedalstellung a des Verbrennungsmotors oder Änderungen des elektrischen Stromes, in Form von kurzen Rampen, beim Verbrennungsmotor sogenannten α-Rampen, vorgegeben und es wird die Totzeit Δt bis zur verzögerten Reaktion des inneren effektiven Drehmoments M_{INT_EFF} oder des effektiven Drehmoments M_{EFF} gemessen, welche im Wesentlichen ein Maß für die Trägheit des Drehmomentaufbaus des Antriebsaggregats 2 darstellt. Diese Ermittlung der Totzeit Δt mittels Rampen sollten sowohl für den sprunghaften Anstieg, als auch den sprunghaften Abfall des inneren effektiven Drehmoments M_{INT_EFF} oder des effektiven Drehmoment M_{EFF} durchgeführt werden, wodurch zwei Totzeit-Kennfelder resultieren. Die Rampen sollten dabei so steil gewählt werden, dass vom Antriebsaggregat 2 die maximale Dynamik gefordert wird.

Die Totzeit Δt für einen Betriebspunkt des Antriebsaggregats 2 kann aber auch durch Analyse des Verlaufs des inneren effektiven Drehmoments M_{INT_EFF} oder des effektiven Drehmoments M_{EFF} ermittelt werden, beispielsweise kann die Totzeit Δt abhängig vom Gradienten des Verlaufs des inneren effektiven Drehmoments M_{INT_EFF} in dem entsprechenden Betriebspunkt festgelegt werden. Diese Methode wird vorzugsweise dann gewählt, wenn keine separaten Messungen am Antriebsaggregat 2 zur Ermittlung der Totzeit Δt durchgeführt werden können oder vorliegen.

Die Übertragungsfunktion UF kann aber auch beliebig anders ausgestaltet sein, wobei die Übertragungsfunktion UF im allgemeinen Fall eine Funktion des inneren effektiven Drehmoments M_{INT_EFF}, also UF=f(M_{INT_EFF}). Vorzugsweise ist die Übertragungsfunktion UF eine Funktion des Betriebspunktes des Antriebsaggregats 2, also UF=f(N, M_{INT_EFF} oder M_{EFF}).

Die vorgegebenen Sollwerte des inneren effektiven Drehmoments M_{INT_EFF_SOLL} oder werden nun mit der Übertragungsfunktion UF korrigiert, um das Zeitverhalten des Antriebsaggregats 2 (die Stelldynamik) zu berücksichtigen, wie nachfolgend am Beispiel einer Totzeit Δt als Übertragungsfunktion UF erläutert wird.

Zur Durchführung des Prüflaufs werden die vorgegebenen Sollwerte um die Totzeit Δt verschoben, insbesondere zeitlich nach vorne geschoben, und am Prüfstand 1 wie oben beschrieben zur Durchführung des Prüflaufs eingeregelt.

Der nach der Verschiebung um die entsprechenden Totzeiten Δt resultierende Verlauf des vorgegebenen inneren effektiven Soll-Drehmoments M_{INT_EFF_SOLL} kann noch so angepasst werden, dass all jene Datenpunkte gelöscht werden, die größere absolute Zeitwerte aufweisen als ihre nachfolgenden Punkte. Dadurch wird ein kontinuierlich steigender Zeitvektor erzeugt. Im nächsten Schritt sollte der resultierende Verlauf der Sollwerte auf eine gemeinsame Zeitbasis mit dem Verlauf der Referenz-Aggregatsdrehzahl N_{A_REF} gebracht werden, um die durch Block D symbolisierte Regelung des Antriebsaggregats 2 am Prüfstand 1 tauglich zu sein.

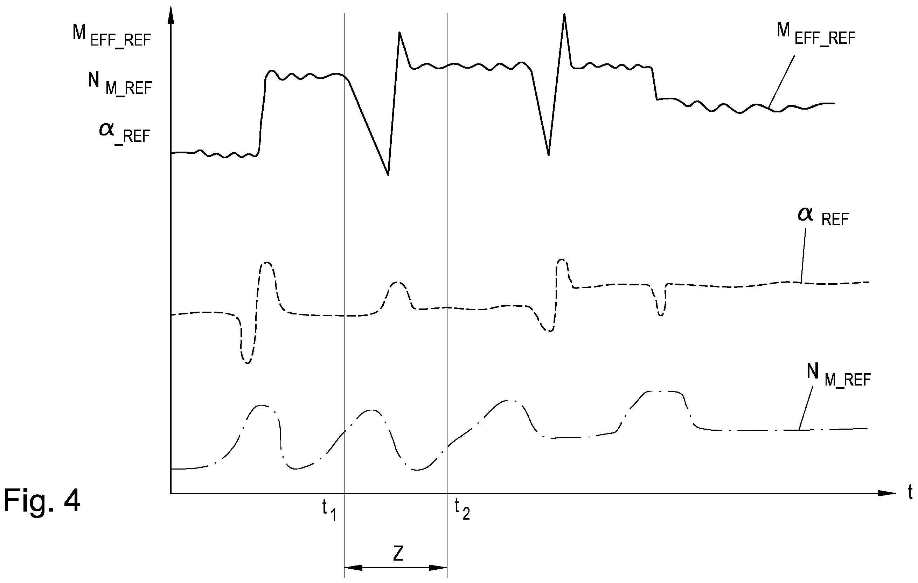

Fig.4 zeigt ein Diagramm mit Messungen eines Referenz-Prüflaufs am Beispiel eines als Verbrennungsmotor ausgeführten Antriebsaggregats 2, wobei der Verlauf der Referenzwerte der Motordrehzahl N_{M_REF} als strichpunktierte Linie, der Verlauf der Referenzwerte des effektiven Drehmoments M_{EFF_REF} an der Verbindungswelle 3 als durchgezogene Linie und der Verlauf der Referenzwerte der Fahrpedalstellung α__{REF} als gestrichelte Linie über der Zeit t aufgetragen sind. Der Referenz-Prüflauf im vorliegenden Beispiel stellt eine Fahrt mit konstanter Beschleunigung mit drei Gangwechseln und anschließender Verzögerung dar. Anhand dieses Referenz-Prüflaufs soll nachfolgend beispielhaft die erzielten Verbesserungen des erfindungsgemäßen Verfahrens dargestellt werden. Ein Referenz-Prüflauf kann mit dem zu untersuchenden Antriebsaggregat 2 oder auch mit einem anderen Referenz-Antriebsaggregat erfolgen. Referenzwerte könnten aber auch aus anderen Quellen stammen, beispielsweise aus gesetzlich vorgegebenen Messzyklen. Zum Zwecke einer übersichtlicheren Darstellung werden die nachfolgenden Ergebnisse im Zeitabschnitt Z dargestellt, der zwischen der Zeit t1 des Referenz-Prüflaufs und der Zeit t2 des Referenz-Prüflaufs liegt, wie in Fig.4 dargestellt.

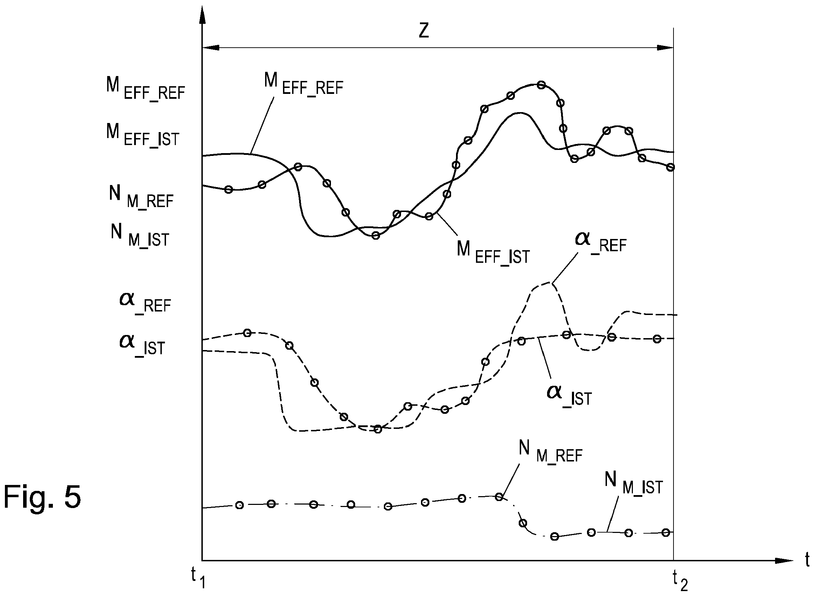

Fig.5 zeigt die Ergebnisse eines ersten Prüflaufs im Zeitabschnitt Z zwischen der Zeit t1 und der Zeit t2 mit der üblichen N/M_{EFF} - Regelungsart. Dabei wird die Motordrehzahl N_{M} mittels der Regelungseinrichtung 5 der Belastungsmaschine 4 geregelt und das effektive Drehmoment M_{EFF} an der Verbindungswelle 3 wird mittels der Aggregatsregelungseinheit 6 über die Stellgröße der Fahrpedalstellung a geregelt. Dabei sind die Verläufe der gemessenen Istwerte des ersten Prüflaufs den Verläufen der Referenzwerte des aus Fig.4 bekannten Referenz-Prüflaufs gegenübergestellt. Wiederum ist der Verlauf der Referenzwerte der Motordrehzahl N_{M_REF} als strichpunktierte Linie gezeichnet, der Verlauf der Referenzwerte des effektiven Drehmoments M_{EFF_REF} an der Verbindungswelle 3 als durchgezogene Linie und der Verlauf der Referenzwerte der Fahrpedalstellung α__{REF} als gestrichelte Linie. Die entsprechenden Verläufe der gemessenen Istwerte N_{M_IST}, M_{EFF_IST} und α_{_IST} sind jeweils mit einem runden Marker versehen. Es ist ersichtlich, dass die Motordrehzahl N_{M} am Prüfstand 1 sehr exakt eingeregelt werden kann, was auf eine leistungsfähige Belastungsmaschine 4 mit entsprechender Regelungscharakteristik zurückzuführen ist. Weiters ist eine relativ schlechte Übereinstimmung zwischen den Referenz- und Ist-Verläufen des effektiven Drehmoments M_{EFF} und Referenz- und Ist-Verläufen der Fahrpedalstellung a ersichtlich. Dies ist, wie eingangs beschrieben, auf die starke Kopplung von Motordrehzahl N_{M} und effektivem Drehmoment M_{EFF} über die Massenträgheit I_{A} des Verbrennungsmotors zurückzuführen.

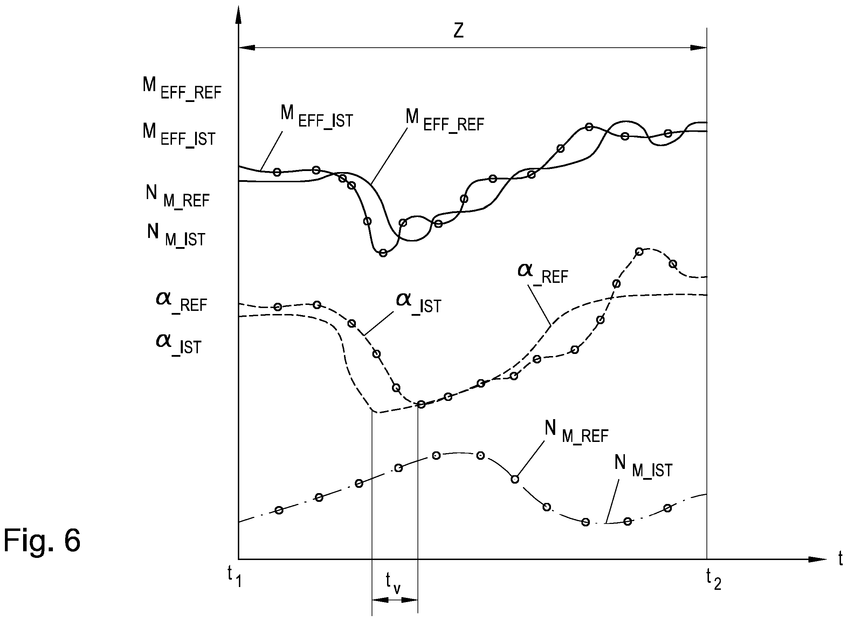

Fig.6 zeigt die Ergebnisse eines zweiten Prüflaufs im Zeitabschnitt Z zwischen der Zeit t1 und der Zeit t2 mit der erfindungsgemäßen Regelungsart N/M_{INT_EFF}. Dabei wird die Motordrehzahl N_{M} mittels der Regelungseinrichtung 5 der Belastungsmaschine 4 geregelt und das innere effektive Drehmoment M_{INT_EFF} wird mittels der Aggregatsregelungseinheit 6 über die Stellgröße der Fahrpedalstellung a geregelt. Dabei sind die Verläufe der gemessenen Istwerte des zweiten Prüflaufs den Verläufen der Referenzwerte des aus Fig.4 bekannten Referenz-Prüflaufs gegenübergestellt. Wiederum ist der Verlauf der Referenzwerte der Motordrehzahl N_{M_REF} als strichpunktierte Linie gezeichnet, der Verlauf der Referenzwerte des effektiven Drehmoments M_{EFF_REF} an der Verbindungswelle 3 als durchgezogene Linie und der Verlauf der Referenzwerte der Fahrpedalstellung α__{REF} als gestrichelte Linie. Die entsprechenden Verläufe der gemessenen Istwerte N_{M_IST}, M_{EFF_IST} und α_{_IST} sind jeweils wiederum mit einem runden Marker versehen. Es ist ersichtlich, dass sich qualitativ bessere Übereinstimmungen der Referenz- und Ist-Verläufe des effektiven Drehmoments M_{EFF} an der Verbindungswelle 3 und der Referenz- und Ist-Verläufe der Fahrpedalstellung a ergeben, jedoch ist auch ein zeitlicher Versatz tᵥ der Referenz- und Ist-Verläufe erkennbar. Dieser Versatz tᵥ ist vorwiegend auf das beschriebene Zeitverhalten der Übertragungsfunktion UF des Verbrennungsmotors zurückzuführen, also im Wesentlichen die Trägheit des Drehmomentaufbaus zwischen Signal der Stellgröße und tatsächlich messbarem Drehmomentaufbau.

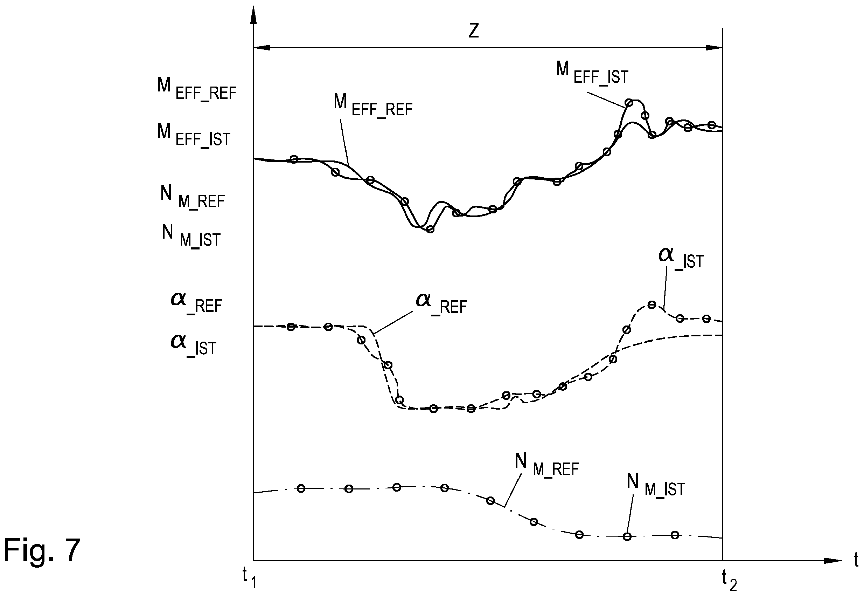

Wie beschrieben ist es vorteilhaft, wenn das Zeitverhalten der Übertragungsfunktion UF des Verbrennungsmotors berücksichtigt wird, indem das innere effektive Soll-Drehmoment M_{INT_EFF_SOLL} um die Totzeit Δt vorverschoben wird, wie nachfolgend anhand Fig. 7 dargestellt wird.

Fig.7 zeigt die Ergebnisse eines dritten Prüflaufs im Zeitabschnitt Z zwischen der Zeit t1 und der Zeit t2 mit der erfindungsgemäßen Regelungsart N/M_{INT_EFF}, wobei das innere effektive Soll-Drehmoment M_{INT_EFF_SOLL} um eine konstante Totzeit Δt von 100ms vorverschoben wurde. Dabei wird die Motordrehzahl N_{M} mittels der Regelungseinrichtung 5 der Belastungsmaschine 4 geregelt und das innere effektive Drehmoment M_{INT_EFF} wird mittels der Aggregatsregelungseinheit 6 über die Stellgröße der Fahrpedalstellung a geregelt. Dabei sind die Verläufe der gemessenen Istwerte des dritten Prüflaufs den Verläufen der Referenzwerte des aus Fig.4 bekannten Referenz-Prüflaufs gegenübergestellt. Wiederum ist der Verlauf der Referenzwerte der Motordrehzahl N_{M_REF} als strichpunktierte Linie gezeichnet, der Verlauf der Referenzwerte des effektiven Drehmoments M_{EFF_REF} an der Verbindungswelle 3 als durchgezogene Linie und der Verlauf der Referenzwerte der Fahrpedalstellung α__{REF} als gestrichelte Linie. Die entsprechenden Verläufe der gemessenen Istwerte N_{M_IST}, M_{EFF_IST} und α_{_IST} sind jeweils wiederum mit einem runden Marker versehen. Man kann eine deutlich bessere Übereinstimmung der Verläufe der Referenz- und Istwerte des effektiven Drehmoments M_{EFF} und Fahrpedalstellung a erkennen. Die Überhöhungen bei den Verläufen der Istwerte des effektiven Drehmoments M_{EFF_IST} und Fahrpedalstellung α_{_IST} lassen sich im vorliegenden Fall z.B. darauf zurückführen, dass der verwendete Regler der Aggregatsregelungseinheit 6 mit dem, um die Totzeit Δt korrigierten Sollwert (Soll-Drehmoment M_{INT_EFF_SOLL} ) eine konstante Regelabweichung während des vorgegangenen Drehmomentanstiegs erfährt. Als Folge erhöht sich durch den integrativen (I)-Anteil im verwendeten Regler die Stellgröße (Fahrpedalstellung a) zu stark. Durch eine andere Reglerparametrierung kann diese Erhöhung vermieden werden.

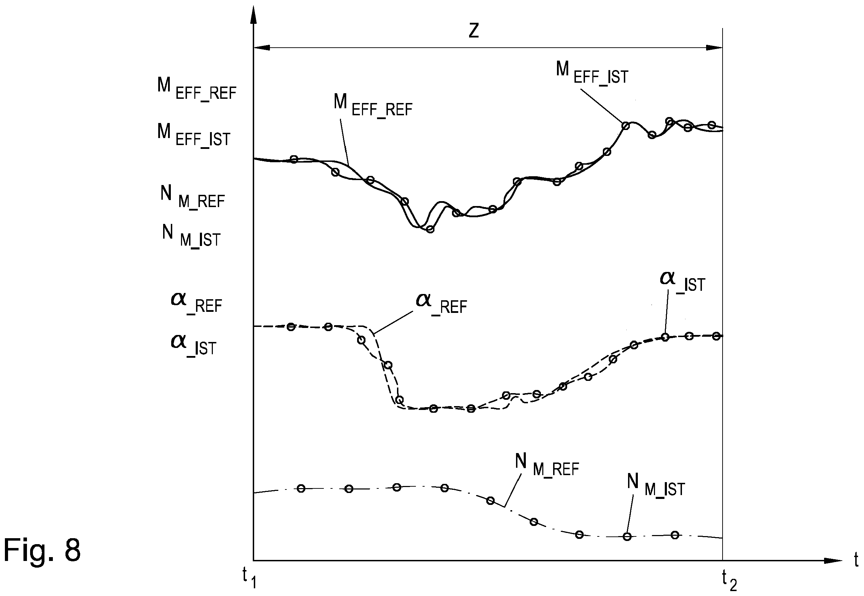

Dieser Effekt kann aber auch dadurch vermieden werden, dass zur Regelung des inneren effektiven Drehmoments M_{INT_EFF} eine Vorsteuerung verwendet wird und dass die Korrektur des Zeitverhaltens nicht auf innere effektive das Soll-Drehmoment M_{INT_EFF_SOLL}, sondern auf einen Vorsteuerwert der Stellgröße der Vorsteuerung angewendet wird. Dafür wird beispielsweise mittels eines Kennfeldes KF der Vorsteuerwert der Fahrpedalstellung a aus dem inneren effektiven Soll-Drehmoment M_{INT_EFF_SOLL} und der Soll-Drehzahl N_{M} ermittelt. Dieser Vorsteuerwert (Fahrpedalstellung a) wird dann um die Totzeit Δt verschoben. Das innere effektive Drehmoment M_{INT_EFF} wird nun ohne Korrektur des inneren effektiven Soll-Drehmoments M_{INT_EFF_SOLL} mittels der Aggregatsregelungseinheit 6 geregelt (siehe Fig.3c) und der, um die Totzeit Δt verschobene, Vorsteuerwert (Fahrpedalstellung a) wird zum Reglerausgang des Reglers der Aggregatsregelungseinheit 6 addiert. Das Ergebnis ist in Fig.8 dargestellt und man erkennt, dass im Wesentlichen keine Überhöhungen bei den Verläufen der Istwerte des effektiven Drehmoments M_{EFF_IST} und Fahrpedalstellung α_{_IST} auftreten. Alternativ könnte aber auch das innere effektive Soll-Drehmoment M_{INT_EFF_SOLL} korrigiert werden und der Vorsteuerwert aus dem korrigierten innere effektiven Soll-Drehmoment M_{INT_EFF_SOLL} und der Soll-Drehzahl N_{M} mittels eines Kennfeldes KF ermittelt werden.

Gemäß einer besonders vorteilhaften Ausführungsform der Erfindung wird das innere effektive Drehmoment M_{INT_EFF_SOLL} um eine Totzeit Δt vorverschoben, die in Abhängigkeit der Betriebspunkte des Antriebsaggregats 2 gewählt wird. Damit können weitere Verbesserungen in der Übereinstimmung der Verläufe der Referenz- und Istwerte des effektiven Drehmoments M_{EFF} und Fahrpedalstellung a erzielt werden. Dazu können für die Totzeit Δt, wie bereits beschrieben, betriebspunktabhängige Kennfelder erstellt werden, die z.B. durch vorherige Vermessung des Antriebsaggregats 2 auf einem Prüfstand 1 ermittelt werden können, wie dies bereits anhand Fig. 3 erörtert wurde.

Wenn eine vorherige Vermessung nicht möglich sein sollte, kann die Totzeit Δt in einem Betriebspunkt des Antriebsaggregats 2 beispielsweise auch in Abhängigkeit des Gradienten des Verlaufs des inneren effektiven Soll-Drehmoments M_{INT_EFF_SOLL} in dem entsprechenden Betriebspunkt ermittelt werden. Es kann aber näherungsweise auch eine konstante Totzeit Δt gewählt werden, wie anhand der Ergebnisse des dritten Prüflaufs in Fig. 7 beschrieben wurde. Es ist natürlich auch möglich, Kennfelder für die Totzeit Δt basierend auf Erfahrungswerten oder basierend auf der Vermessung von Referenz -Antriebsaggregaten zu erstellen, Referenz-Verbrennungsmotoren können in diesem Zusammenhang beispielsweise bauartähnliche Verbrennungsmotoren sein, z.B. Verbrennungsmotoren mit vergleichbaren Kenngrößen wie ähnlicher Hubraum, gleiche Zylinderzahl, gleiches Aufladekonzept, gleiche Gemischbildung, etc. Auch wenn das erfindungsgemäße Verfahren beispielhaft anhand Messungen eines Verbrennungsmotors beschrieben wurde, sei an der Stelle nochmals angemerkt, dass das Verfahren auch für andere Antriebsaggregate 2 geeignet ist, z.B. Elektromotoren, Hybridantriebe, Antriebsstränge, etc.

## Patentansprüche

1. Verfahren (1) zum Durchführen eines Prüflaufs auf einem Prüfstand mit einem Antriebsaggregat (2), das mittels einer Verbindungswelle (3) mit einer Belastungsmaschine (4) zum Antrieb oder zur Belastung des Antriebsaggregats (2) verbunden wird, wobei die Belastungsmaschine (4) am Prüfstand (1) zur Durchführung des Prüflaufs von einer Regelungseinrichtung (5) geregelt wird und das Antriebsaggregat (2) zur Durchführung des Prüflaufs von einer Aggregatsregelungseinheit (6) geregelt wird, wobei zur Durchführung des Prüflaufs vorgegebene zeitliche Verläufe einer Drehzahl und eines Drehmoments des Antriebsaggregats (2) nachgebildet werden, wobei ein inneres effektives Drehmoment (M_{INT_EFF}) des Antriebsaggregats (2) von der Aggregatsregelungseinheit (6) geregelt wird, wobei ein inneres effektives Ist-Drehmoment (M_{INT_EFF_IST}) während des Betriebs des Antriebsaggregats (2) am Prüfstand (1) aus Messwerten der Belastungsmaschine (4) und/oder des Antriebsaggregats (2) und/oder der Verbindungswelle (3) und/oder einer bekannten Massenträgheit (I_{A}) des Antriebsaggregats (2) ermittelt wird, **dadurch gekennzeichnet, dass** ein inneres effektives Soll-Drehmoment (M_{INT_EFF_SOLL}) aus den vorgegebenen Verläufen der Drehzahl und des Drehmoments des Antriebsaggregats (2) und einer bekannten Massenträgheit (l_{A}) des Antriebsaggregats (2) ermittelt wird.

2. Verfahren nach Anspruch 1, **dadurch gekennzeichnet, dass** das innere effektive Ist-Drehmoment (M_{INT_EFF_IST}) aus einer an der Belastungsmaschine (4) oder am Antriebsaggregat (2) oder an der Verbindungswelle (3) gemessenen Ist-Drehzahl (N_{IST}) und eines an der Belastungsmaschine (4) oder am Antriebsaggregat (2) oder an der Verbindungswelle (3) gemessenen effektiven Ist-Drehmoments (M_{EFF_IST}) und der bekannten Massenträgheit (I_{A}) des Antriebsaggregats (2) ermittelt wird, wobei das innere effektive Ist-Drehmoment (M_{INT_EFF_IST}) vorzugsweise ermittelt wird, indem die gemessene Ist-Drehzahl (N_{IST}) nach der Zeit abgeleitet wird und mit der bekannten Massenträgheit (I_{A}) des Antriebsaggregats multipliziert wird und das Produkt zum gemessenen effektiven Ist-Drehmoment (M_{EFF_IST}) addiert wird.

3. Verfahren nach Anspruch 1, **dadurch gekennzeichnet, dass** als Antriebsaggregat (2) ein Verbrennungsmotor verwendet wird und dass das innere effektive Ist-Drehmoment (M_{INT_EFF_IST}) mittels Zylinderdruckindizierung am Verbrennungsmotor ermittelt wird, wobei das innere effektive Ist-Drehmoment (M_{INT_EFF_IST}) vorzugsweise aus der Differenz zwischen einem indizierten Ist-Drehmoment (M_{INDI_IST}) und einem Reib-Drehmoment (M_{R}) ermittelt wird, wobei das indizierten Ist-Drehmoment (M_{INDI_IST}) mittels der Zylinderdruckindizierung ermittelt wird.

4. Verfahren nach einem der Ansprüche 1 bis 3, **dadurch gekennzeichnet, dass** das innere effektive Soll-Drehmoment (M_{INT_EFF_SOLL}) aus dem vorgegebenen Verlauf der Drehzahl des Antriebsaggregats (2), dem vorgegebenen Verlauf des Drehmoments des Antriebsaggregats (2) und aus der bekannten Massenträgheit (I_{A}) des Antriebsaggregats (2) ermittelt wird, indem der Verlauf der vorgegebenen Drehzahl nach der Zeit abgeleitet wird und mit der bekannten Massenträgheit (I_{A}) des Antriebsaggregats (2) multipliziert wird und das Produkt zum vorgegebenen Verlauf des Drehmoments des Antriebsaggregats (2) addiert wird.

5. Verfahren nach einem der Ansprüche 1 bis 4, **dadurch gekennzeichnet, dass** zur Regelung des Antriebsaggregats (2) eine Vorsteuerung einer Stellgröße des Antriebsaggregats (2) verwendet wird, wobei als Stellgröße vorzugsweise die Fahrpedalstellung (a) verwendet wird.

6. Verfahren nach Anspruch 5, **dadurch gekennzeichnet, dass** Vorsteuerwerte der Stellgröße aus einem Referenzprüflauf des Antriebsaggregats (2) oder eines Referenzantriebsaggregats ermittelt werden.

7. Verfahren nach Anspruch 6, **dadurch gekennzeichnet, dass** die Vorsteuerwerte aus dem inneren effektiven Soll-Drehmoment (M_{INT_EFF_SOLL}) und einer Drehzahl, insbesondere der Ist-Drehzahl (N_{Ist}), oder der vorgegebenen Drehzahl ermittelt werden, vorzugsweise mittels eines Kennfeldes (KF) .

8. Verfahren nach einem der Ansprüche 1 bis 7, **dadurch gekennzeichnet, dass** mittels einer Übertragungsfunktion (UF) die Stelldynamik des Antriebsaggregats (2) bei dessen Regelung berücksichtigt wird, indem Sollwerte der Regelung oder die Vorsteuerwerte der Stellgröße mit der Übertragungsfunktion (UF) korrigiert werden.

9. Verfahren nach Anspruch 8, **dadurch gekennzeichnet, dass** durch die Übertragungsfunktion die Sollwerte oder die Vorsteuerwerte der Stellgröße um eine Totzeit (Δt) auf der Zeitachse verschoben werden.

10. Verfahren nach Anspruch 9, **dadurch gekennzeichnet, dass** die Totzeit (Δt) für alle Betriebspunkte des Antriebsaggregats (2) gleich groß festgelegt wird oder abhängig vom Betriebspunkt des Antriebsaggregats (2) festgelegt wird oder für einen Betriebspunkt des Antriebsaggregats (2) abhängig vom Gradienten des Verlaufs des inneren effektiven Soll-Drehmoments (M_{INT_EFF_SOLL}) in dem Betriebspunkt festgelegt wird.

11. Verfahren nach einem der Ansprüche 9 bis 10, **dadurch gekennzeichnet, dass** die Totzeit (Δt) durch Vermessung des Antriebsaggregats (2) oder eines ReferenzAntriebsaggregats auf dem Prüfstand (1) ermittelt wird, wobei die Totzeit (Δt) vorzugsweise gemessen wird, indem die Stellgröße des Antriebsaggregats (2) sprunghaft geändert wird und die Zeit zwischen der sprunghaften Änderung der Stellgröße und einer dadurch bewirkten Änderung des inneren effektiven Ist-Drehmoments (M_{INT_EFF_IST}) gemessen wird.

12. Prüfstand (1) zum Durchführen eines Prüflaufs mit einem Antriebsaggregat (2), das mittels einer Verbindungswelle (3) mit einer Belastungsmaschine (4) zum Antrieb oder zur Belastung des Antriebsaggregats (2) verbunden ist, wobei eine Regelungseinrichtung (5) vorgesehen ist, die die Belastungsmaschine (4) am Prüfstand (1) zur Durchführung des Prüflaufs regelt und eine Aggregatsregelungseinheit (6) vorgesehen ist, die das Antriebsaggregat (2) zur Durchführung des Prüflaufs regelt, wobei der Prüfstand zur Durchführung des Prüflaufs in Form von vorgegebenen zeitlichen Verläufen einer Drehzahl und eines Drehmoments des Antriebsaggregats (2) vorgesehen ist, wobei die Aggregatsregelungseinheit (6) ein inneres effektives Drehmoment (M_{INT_EFF}) des Antriebsaggregats (2) regelt, wobei die Aggregatsregelungseinheit (6) zur Regelung ein inneres effektives Ist-Drehmoment (M_{INT_EFF_IST}) während des Betriebs des Antriebsaggregats (2) am Prüfstand (1) aus Messwerten der Belastungsmaschine (4) und/oder des Antriebsaggregats (2) und/oder der Verbindungswelle (3) und/oder einer bekannten Massenträgheit (I_{A}) des Antriebsaggregats (2) ermittelt, **dadurch gekennzeichnet, dass** die Aggregatsregelungseinheit (6) zur Regelung zusätzlich ein inneres effektives Soll-Drehmoment (M_{INT_EFF_SOLL}) aus den vorgegebenen Verläufen der Drehzahl und des Drehmoments des Antriebsaggregats (2) und einer bekannten Massenträgheit (I_{A}) des Antriebsaggregats (2) ermittelt.

13. Prüfstand (1) nach Anspruch 12, **dadurch gekennzeichnet, dass** der Prüfstand (1) einen Beobachter (10) in Form einer Hardware oder Software zur Ermittlung der Istwerte des inneren effektiven Drehmoments (M_{INT_EFF_IST}) aufweist.

14. Prüfstand (1) nach Anspruch 13, **dadurch gekennzeichnet, dass** der Beobachter (10) vorgesehen ist, das innere effektive Ist-Drehmoment (M_{INT_EFF_IST}) aus einer an der Belastungsmaschine (4) oder am Antriebsaggregat (2) oder an der Verbindungswelle (3) gemessenen Ist-Drehzahl (N_{IST}) und eines an der Belastungsmaschine (4) oder am Antriebsaggregat (2) oder an der Verbindungswelle (3) gemessenen effektiven Ist-Drehmoments (M_{EFF_IST}) und der bekannten Massenträgheit (I_{A}) des Antriebsaggregats (2) zu ermitteln.

15. Prüfstand (1) nach Anspruch 12, **dadurch gekennzeichnet, dass** als Antriebsaggregat (2) ein Verbrennungsmotor vorgesehen ist und dass ein Zylinderdruckindiziersystem zur Zylinderdruckindizierung des Verbrennungsmotors am Prüfstand (1) vorgesehen ist, wobei das innere effektive Ist-Drehmoment (M_{INT_EFF_IST}) aus der Zylinderdruckindizierung ermittelt wird, wobei das innere effektive Ist-Drehmoment (M_{INT_EFF_IST}) vorzugsweise aus der Differenz zwischen einem indizierten Ist-Drehmoment (M_{INDI_IST}) und einem Reib-Drehmoment (M_{R}) ermittelt wird, wobei das indizierte Ist-Drehmoment (M_{INDI_IST}) mittels der Zylinderdruckindizierung ermittelt wird.

## Claims

1. Method (1) for performing a test run on a test stand with a drive unit (2), which is connected by means of a connecting shaft (3) to a load machine (4) for driving or loading the drive unit (2), wherein the load machine (4) is controlled by a control device (5) on the test stand (1) for carrying out the test run and the drive unit (2) is controlled by a drive unit controlling unit (6) for carrying out the test run, wherein for performing the test run given time courses of a rotational speed and a torque of the drive unit (2) are reproduced, wherein an inner effective torque (M_{INT_EFF}) of the drive unit (2) is controlled by the drive unit controlling unit (6), wherein an inner effective actual torque (M_{INT_EFF_IST}) is determined during the operation of the drive unit (2) on the test stand (1) from measured values of the load machine (4) and/or of the drive unit (2) and/or of the connecting shaft (3) and/or of a known mass inertia (I_{A}) of the drive unit (2), **characterized in that** an inner effective desired torque (M_{INT_EFF_SOLL}) is determined from the given courses of the rotational speed and the torque of the drive unit (2) and a known mass inertia (I_{A}) of the drive unit (2).

2. Method according to claim 1, **characterized in that** the inner effective actual torque (M_{INT_EFF_IST}) is determined from an actual rotational speed (N_{IST}) measured on the load machine (4), or the drive unit (2), or the connecting shaft (3) and from an effective actual torque (M_{INT_EFF_IST}) measured on the load machine (4), or the drive unit (2), or the connecting shaft (3), and the known mass inertia (I_{A}) of the drive unit (2), wherein the inner effective actual torque (M_{INT_EFF_IST}) is preferably determined by deriving the actual rotational speed (N_{IST}) measured with respect to time and multiplying by the known mass inertia (I_{A}) of the drive unit and adding the product to the measured effective actual torque (M_{EFF_IST}).

3. Method according to claim 1, **characterized in that** an internal combustion engine is used as the drive unit (2) and that the inner effective actual torque (M_{INT_EFF_IST}) is determined by means of cylinder pressure indication on the internal combustion engine, wherein the inner effective actual torque (M_{INT_EFF_IST}) is preferably determined from the difference between an indicated actual torque (M_{INDI_IST}) and a friction torque (M_{R}), wherein the indicated actual torque (M_{INDI_IST}) is determined by means of the cylinder pressure indication.

4. Method according to any of claims 1 to 3, **characterized in that** the inner effective desired torque (M_{INT_EFF_SOLL}) is determined from the given course of the rotational speed of the drive unit (2), the given course of the torque of the drive unit (2) and from the known mass inertia (I_{A}) of the drive unit (2) by deriving the course of the given rotational speed with respect to time and multiplying by the known mass inertia (I_{A}) of the drive unit (2), and adding the product to the given course of the torque of the drive unit (2).

5. Method according to any of the claims 1 to 4, **characterized in that** a feed forward control of a manipulated variable of the drive unit (2) is used to control the drive unit (2), wherein the accelerator pedal position (a) is preferably used as the manipulated variable.

6. Method according to claim 5, **characterized in that** precontrol values of the manipulated variable are determined from a reference test run of the drive unit (2) or a reference drive unit.

7. Method according to claim 6 , **characterized in that** the precontrol values are determined from the inner effective desired torque (M_{INT_EFF_SOLL}) and a rotational speed, in particular the actual rotational speed (N_{IST}), or the given rotational speed, preferably by means of a characteristic map (KF).

8. Method according to any of the claims 1 to 7, **characterized in that** the actuating dynamics of the drive unit (2) are taken into account in its control by means of a transfer function (UF) by correcting desired values of the control or the precontrol values of the manipulated variable with the transfer function (UF).

9. Method according to claim 8, **characterized in that** the desired values or the precontrol values of the manipulated variable are shifted by a dead time (Δt) on the time axis using the transfer function.

10. Method according to claim 9, **characterized in that** the dead time (Δt) is set to be the same for all operating points of the drive unit (2) or that the dead time (Δt) is determined depending on the operating point of the drive unit (2) or that the dead time (Δt) for an operating point of the drive unit (2) is determined depending on the gradient of the course of the inner effective desired torque (M_{INT_EFF_SOLL}) in the operating point.

11. The method according to any of claims 9 to 10, **characterized in that** the dead time (Δt) is determined by measuring the drive unit (2) or a reference drive unit on the test stand (1), wherein the dead time (Δt) is preferably measured by suddenly changing the manipulated variable of the drive unit (2) and measuring the time between the sudden change in the manipulated variable and a change in the inner effective actual torque (M_{INT_EFF_IST}) caused thereby.

12. Test stand (1) for performing a test run with a drive unit (2), which is connected by means of a connecting shaft (3) to a load machine (4) for driving or loading the drive unit (2), wherein a control device (5) is provided which controls the load machine (4) on the test stand (1) for carrying out the test run and a drive unit controlling unit (6) is provided which controls the drive unit (2) for carrying out the test run, wherein the test stand is provided for carrying out the test run in the form of given time courses of a rotational speed and a torque of the drive unit (2), wherein the for controlling, the drive unit controlling unit (6) determines an inner effective actual torque (M_{INT_EFF_IST}) during the operation of the drive unit (2) on the test stand (1) from measured values of the load machine (4), and/or of the drive unit (2), and/or of the connecting shaft (3), and/or of a known mass inertia (I_{A}) of the drive unit (2), **characterized in that** for controlling, the drive unit controlling unit (6) additionally determines an inner effective desired torque (M_{INT_EFF_SOLL}) from the given courses of the rotational speed and the torque of the drive unit (2) and a known mass inertia (I_{A}) of the drive unit (2).

13. Test stand (1) according to claim 12, **characterized in that** the test stand (1) comprises an observer (10) in the form of hardware or software for determining the actual values of the inner effective torque (M_{INT_EFF_IST}).

14. Test stand (1) according to claim 13 **characterized in that** the observer (10) is configured to determine the inner effective actual torque (M_{INT_EFF_IST}) from an actual rotational speed (N_{IST}) measured on the load machine (4), or the drive unit (2), or the connecting shaft (3) and an effective actual torque (M_{INT_EFF_IST}) measured on the load machine (4), or the drive unit (2), or the connecting shaft (3), and the known mass inertia (I_{A}) of the drive unit (2).

15. Test stand (1) according to claim 12, **characterized in that** an internal combustion engine is provided as the drive unit (2) and that a cylinder pressure indication system for cylinder pressure indication of the internal combustion engine is provided on the test stand (1), wherein the inner effective actual torque (M_{INT_EFF_IST}) is determined from the cylinder pressure indication, wherein the inner effective actual torque (M_{INT_EFF_IST}) is preferably determined from the difference between an indicated actual torque (M_{INDI_IST}) and a friction torque (M_{R}), wherein the indicated actual torque (M_{INDI_IST}) is determined by means of the cylinder pressure indication.

## Revendications

1. Procédé (1) permettant d'effectuer un cycle d'essai sur un banc d'essai comportant un organe d'entraînement (2) qui est relié, au moyen d'un arbre de liaison (3), à une machine de chargement (4) permettant d'entraîner ou de charger l'organe d'entraînement (2), la machine de chargement (4) étant commandée par un dispositif de commande (5) sur le banc d'essai (1) pour effectuer le cycle d'essai et l'organe d'entraînement (2) étant commandé par une unité de commande d'organe (6) pour effectuer le cycle d'essai, des courbes temporelles prédéfinies d'une vitesse de rotation et d'un couple de l'organe d'entraînement (2) étant simulées pour effectuer le cycle d'essai, un couple effectif interne (M_{INT_EFF}) de l'organe d'entraînement (2) étant commandé par l'unité de commande d'organe (6),
un couple réel effectif interne (M_{INT_EFF_IST}) étant déterminé pendant le fonctionnement de l'organe d'entraînement (2) sur le banc d'essai (1) à partir de valeurs de mesure de la machine de chargement (4) et/ou de l'organe d'entraînement (2) et/ou de l'arbre de liaison (3) et/ou d'une inertie de masse connue (I_{A}) de l'organe d'entraînement (2), **caractérisé en ce qu'**un couple de consigne effectif interne (M_{INT_EFF_SOLL}) est déterminé à partir des courbes prédéfinies de la vitesse de rotation et du couple de l'organe d'entraînement (2) et d'une inertie de masse connue (I_{A}) de l'organe d'entraînement (2).

2. Procédé selon la revendication 1, **caractérisé en ce que** le couple réel effectif interne (M_{INT_EFF_IST}) est déterminé à partir d'une vitesse de rotation réelle (N_{IST}) mesurée sur la machine de chargement (4) ou sur l'organe d'entraînement (2) ou sur l'arbre de liaison (3) et d'un couple réel effectif mesuré sur la machine de chargement (4) ou sur l'organe d'entraînement (2) ou sur l'arbre de liaison (3) (M_{EFF_IST}) et de l'inertie de masse connue (I_{A}) de l'organe d'entraînement (2), le couple réel effectif interne (M_{INT_EFF_IST}) étant de préférence déterminé par la déduction de la vitesse de rotation réelle mesurée (N_{IST}) par rapport au temps et par sa multiplication par l'inertie de masse connue (I_{A}) de l'organe d'entraînement et par l'ajout du produit au couple réel effectif (M_{EFF_IST}) mesuré.

3. Procédé selon la revendication 1, **caractérisé en ce qu'**un moteur à combustion interne est utilisé comme organe d'entraînement (2) et **en ce que** le couple réel effectif interne (M_{INT_EFF_IST}) est déterminé au moyen de l'indexation de pression de cylindre sur le moteur à combustion interne, le couple réel effectif interne (M_{INT_EFF_IST}) étant de préférence déterminé à partir de la différence entre un couple réel indexé (M_{INDI_IST}) et un couple de friction (M_{R}), le couple réel indexé (M_{INDI_IST}) étant déterminé au moyen de l'indexation de pression de cylindre.

4. Procédé selon l'une des revendications 1 à 3, **caractérisé en ce que** le couple de consigne effectif interne (M_{INT_EFF_SOLL}) est déterminé à partir de la courbe prédéfinie de la vitesse de rotation de l'organe d'entraînement (2), de la courbe prédéfinie du couple de l'organe d'entraînement (2) et de l'inertie de masse connue (I_{A}) de l'organe d'entraînement (2), par la déduction de la courbe de la vitesse de rotation prédéfinie par rapport au temps et par sa multiplication par l'inertie de masse connue (I_{A}) de l'organe d'entraînement (2) et par l'ajout du produit à la courbe prédéfinie du couple de l'organe d'entraînement (2).

5. Procédé selon l'une des revendications 1 à 4, **caractérisé en ce qu'**une commande pilote d'une grandeur de réglage de l'organe d'entraînement (2) est utilisée pour commander l'organe d'entraînement (2), la position de la pédale d'accélérateur (a) étant utilisée comme grandeur de réglage.

6. Procédé selon la revendication 5, **caractérisé en ce que** des valeurs de commande pilote de la grandeur de réglage sont déterminées à partir d'un cycle d'essai de référence de l'organe d'entraînement (2) ou d'un organe d'entraînement de référence.

7. Procédé selon la revendication 6, **caractérisé en ce que** les valeurs de commande pilote sont déterminées à partir du couple de consigne effectif interne (M_{INT_EFF_SOLL}) et d'une vitesse de rotation, en particulier de la vitesse de rotation réelle (N_{IST}), ou de la vitesse de rotation prédéfinie, de préférence au moyen d'un champ caractéristique (KF).

8. Procédé selon l'une des revendications 1 à 7, **caractérisé en ce que,** au moyen d'une fonction de transfert (UF), la dynamique de réglage de l'organe d'entraînement (2) est prise en compte lorsqu'elle est commandée par la correction de valeurs de consigne de la commande ou des valeurs de commande pilote de la grandeur de réglage avec la fonction de transfert (UF).

9. Procédé selon la revendication 8, **caractérisé en ce que** les valeurs de consigne ou les valeurs de commande pilote de la grandeur de réglage sont décalées d'un temps mort (Δt) sur l'axe temporel au moyen de la fonction de transfert.

10. Procédé selon la revendication 9, **caractérisé en ce que** le temps mort (Δt) est défini pour être le même pour tous les points de fonctionnement de l'organe d'entraînement (2) ou est défini en fonction du point de fonctionnement de l'organe d'entraînement (2) ou est défini au point de fonctionnement pour un point de fonctionnement de l'organe d'entraînement (2) en fonction des gradients de la courbe du couple de consigne effectif interne (M_{INT_EFF_SOLL}).

11. Procédé selon l'une des revendications 9 à 10, **caractérisé en ce que** le temps mort (Δt) est déterminé par la mesure de l'organe d'entraînement (2) ou d'un organe d'entraînement de référence sur le banc d'essai (1), le temps mort (Δt) étant mesuré de préférence par le changement brusque de la grandeur de réglage de l'organe d'entraînement (2) et par la mesure du temps entre le changement brusque de la grandeur de réglage et un changement en résultant du couple réel effectif interne (M_{INT_EFF_IST}).

12. Banc d'essai (1) permettant d'effectuer un cycle d'essai comportant un organe d'entraînement (2) qui est relié, au moyen d'un arbre de liaison (3), à une machine de chargement (4) permettant d'entraîner ou de charger l'organe d'entraînement (2), un dispositif de commande (5) étant prévu, lequel commande la machine de chargement (4) sur le banc d'essai (1) pour effectuer le cycle d'essai et une unité de commande d'organe (6) étant prévue, laquelle commande l'organe d'entraînement (2) pour effectuer le cycle d'essai, le banc d'essai étant prévu sous la forme de courbes temporelles prédéfinies d'une vitesse de rotation et d'un couple de l'organe d'entraînement (2) pour effectuer le cycle d'essai, l'unité de commande d'organe (6) commandant un couple effectif interne (M_{INT_EFF}) de l'organe d'entraînement (2),
l'unité de commande d'organe (6) déterminant un couple réel effectif interne (M_{INT_EFF_IST}), pour la commande, pendant le fonctionnement de l'organe d'entraînement (2) sur le banc d'essai (1) à partir de valeurs de mesure de la machine de chargement (4) et/ou de l'organe d'entraînement (2) et/ou de l'arbre de liaison (3) et/ou d'une inertie de masse connue (I_{A}) de l'organe d'entraînement (2), **caractérisé en ce que** l'unité de commande d'organe (6) détermine en outre un couple de consigne effectif interne (M_{INT_EFF_SOLL}), pour la commande, à partir des courbes prédéfinies de la vitesse de rotation et du couple de l'organe d'entraînement (2) et d'une inertie de masse connue (I_{A}) de l'organe d'entraînement (2).

13. Banc d'essai (1) selon la revendication 12, **caractérisé en ce que** le banc d'essai (1) présente un observateur (10) sous la forme d'un matériel ou d'un logiciel pour déterminer les valeurs réelles du couple effectif interne (M_{INT_EFF_IST}).

14. Banc d'essai (1) selon la revendication 13, **caractérisé en ce que** l'observateur (10) est prévu pour déterminer le couple réel effectif interne (M_{INT_EFF_IST}) à partir d'une vitesse de rotation réelle (N_{IST}) mesurée sur la machine de chargement (4) ou sur l'organe d'entraînement (2) ou sur l'arbre de liaison (3), et d'un couple réel effectif (M_{EFF_IST}) mesuré sur la machine de chargement (4) ou sur l'organe d'entraînement (2) ou sur l'arbre de liaison (3), et de l'inertie de masse connue (I_{A}) de l'organe d'entraînement (2).

15. Banc d'essai (1) selon la revendication 12, **caractérisé en ce qu'**un moteur à combustion interne est prévu en tant qu'organe d'entraînement (2), et qu'un système d'indexation de pression de cylindre pour l'indexation de la pression de cylindre du moteur à combustion interne est prévu sur le banc d'essai (1), le couple réel effectif interne (M_{INT_EFF_IST}) étant déterminé à partir de l'indexation de pression de cylindre, le couple réel effectif interne (M_{INT_EFF_IST}) étant de préférence déterminé à partir de la différence entre un couple réel indexé (M_{INDI_IST}) et un couple de friction (M_{R}), le couple réel indexé (M_{NDI_IST}) étant déterminé au moyen de l'indexation de pression de cylindre.
